## Europäisches Patentamt
## European Patent Office
## Office européen des brevets

(19)

(11) Veröffentlichungsnummer **0 026 419**
**B1**

(12)

# EUROPÄISCHE PATENTSCHRIFT

(45) Veröffentlichungstag der Patentschrift:
**23.01.85**

(51) Int. Cl.⁴: **A 01 M 1/14, A 01 M 1/02**

(21) Anmeldenummer: **80105670.6**

(22) Anmeldetag: **20.09.80**

(54) **Insektenfalle.**

(30) Priorität: **29.09.79 DE 7927762 U**

(43) Veröffentlichungstag der Anmeldung:
**08.04.81 Patentblatt 81/14**

(45) Bekanntmachung des Hinweises auf die Patenterteilung:
**23.01.85 Patentblatt 85/4**

(84) Benannte Vertragsstaaten:
**AT CH DE FR GB IT LI NL SE**

(56) Entgegenhaltungen:
**DE - C - 136 352**
**FR - A - 2 351 595**
**GB - A - 1 507 696**

(73) Patentinhaber: **HOECHST AKTIENGESELLSCHAFT,**
**Postfach 80 03 20, D-6230 Frankfurt am Main 80 (DE)**

(72) Erfinder: **Knauf, Werner, Dr., Völklinger Weg 64,**
**D-6000 Frankfurt am Main 71 (DE)**
Erfinder: **Burghardt, Gerhard, Dr., Auwald 8,**
**D-6238 Hofheim am Taunus (DE)**

## Beschreibung

Gegenstand der Erfindung ist eine dreieckförmige Insektenfalle in Form eines Satteldaches mit einschiebbaren Böden zum Tragen von Leim und Pheromon.

Pheromone sind Sexuallockstoffe von Lebewesen, die unter anderen Faktoren zur Auffindung des jeweiligen Geschlechtspartners abgegeben werden. Mit ihrer Hilfe kann nach dem sogenannten Monitorverfahren für Schadinsekten deren Flugaktivität festgestellt werden. Bei diesem Verfahren werden Pheromone auf Trägermaterial aufgebracht und in Fallen im Freiland ausgehängt. Die durch das Pheromon angelockten Schädlinge kleben nach Eindringen ins Fallengehäuse auf einer Leimfläche fest. Die Anzahl der auf der Leimfläche einer bestimmten Zeiteinheit ermittelten Schädlinge dient als Maßstab für ihre Flugaktivität. Die mit diesem Monitorsystem erhaltenen Daten dienen der Ermittlung eines optimalen Bekämpfungszeitpunktes von Schädlingen.

Nach der FR-A-2 351 595 sind Insektenfallen der eingangs genannten Art bekannt, die sich zum Durchführen des vorstehenden Verfahrens eignen. Nachteilig ist, daß diese Insektenfallen weder formstabil noch variabel in ihren Fangkapazitäten ausgebildet sind.

Der Erfindung liegt demnach die Aufgabe zugrunde, eine dreieckförmige Insektenfalle zu schaffen, bei der die vorerwähnten Nachteile vermieden werden.

Die Aufgabe wird durch eine Insektenfalle gelöst, die dadurch gekennzeichnet ist, daß zur Unterstützung der oberen Dachkante eine vertikale Stützwand angeordnet ist, an die sich Aufkantungen der einschiebbaren Böden anlegen.

In einer besonderen Ausführungsform ist die obere Dachkante mit einem First versehen, in den die Stützwand hineinragt.

Durch die Stützwand, die aus mehreren Teilen gebildet sein kann, erhält die Insektenfalle nicht nur die notwendige Stabilität, sondern sie wird auch in zwei Kammern geteilt, in die jeweils unabhängig voneinander Böden zum Tragen des Leims und Pheromons eingeschoben werden können, wodurch sich die Fangkapazität einstellen läßt. Durch die an der Stützwand anliegenden Aufkantungen der Böden konnte die Bodenfläche erheblich vergrößert werden.

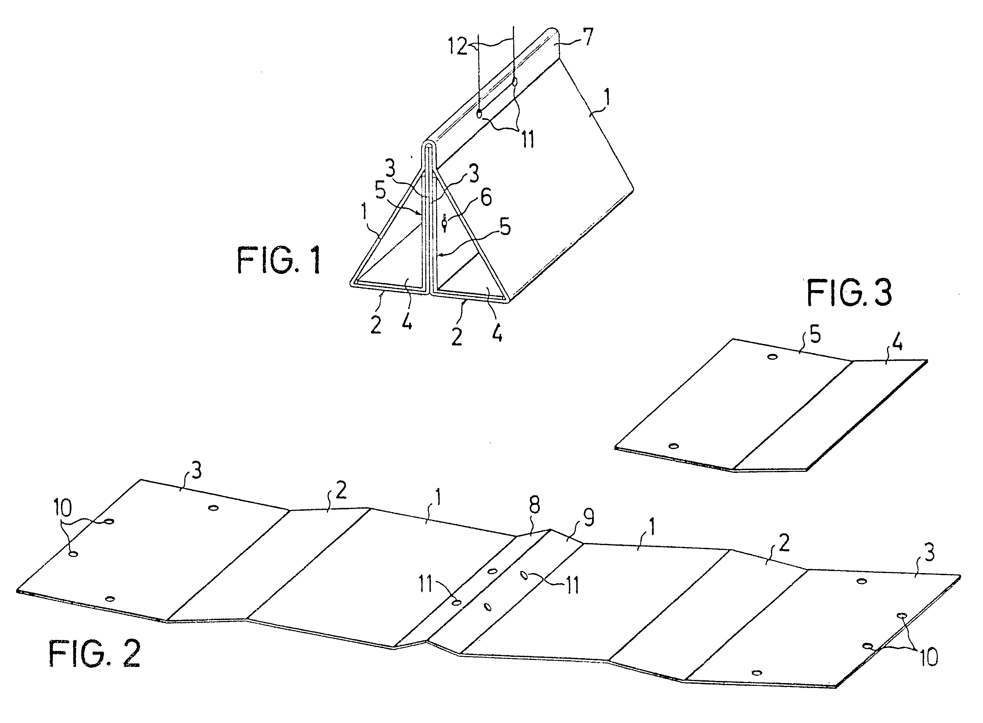

Im folgenden wird die Erfindung anhand von lediglich ein Ausführungsbeispiel darstellenden Zeichnungen näher erläutert. Es zeigt
Fig. 1 die Insektenfalle in perspektivischer Darstellung,
Fig. 2 die Insektenfalle abgewickelt,
Fig. 3 den einschiebbaren Boden abgewickelt.

Die dreieckförmige Insektenfalle wird durch die Dachteile 1, die Bodenteile 2 und die Stützwandteile 3 gebildet. Die Stützwandteile 3 ergeben die Stützwand. Die Insektenfalle weist zwei einschiebbare Böden 4 auf, deren Aufkantungen 5 sich an die Stützwandteile 3 und damit an die Stützwand anlegen. Aufkantungen 5 und Stützwandteile 3 sind durch Verbindungselemente 6, z. B. Klammern oder Splinte miteinander verbunden. In einer besonderen Ausführungsform ist die obere Dachkante der Insektenfalle mit einem First 7 versehen, der aus den Teilen 8 und 9 gebildet wird. Zweckmäßigerweise ragen die Stützwandteile 3 in den First 7 hinein. Zur Aufnahme einer Aufhängevorrichtung 12 sind First und Stützwandteile mit Löchern 10, 11 versehen.

## Patentansprüche

1. Dreieckförmige Insektenfalle in Form eines Satteldaches mit einschiebbaren Böden zum Tragen von Leim und Pheromon, dadurch gekennzeichnet, daß zur Unterstützung der oberen Dachkante eine vertikale Stützwand (3) angeordnet ist, an die sich Aufkantungen (5) der einschiebbaren Böden (3) anlegen.

2. Insektenfalle nach Anspruch 1, dadurch gekennzeichnet, daß die obere Dachkante mit einem First (7) versehen ist, in den die Stützwand (3) hineinragt.

## Claims

1. Triangular roof shaped insect trap having drawers for carrying glue and pheromone, wherein a vertical supporting wall (3) for supporting the top of the roof is arranged and the upright portions (5) of the drawers border on said wall (3).

2. Insect trap as claimed in claim 1, wherein the top of the roof is provided with a ridge (7) into which the supporting wall (3) projects.

## Revendications

1. Piège à insectes triangulaire présentant la forme d'un toit à deux pentes, muni de fonds emmanchables distinés à porter de la glu et une phéromone, caractérisé en ce que, pour soutenir l'arête supérieure du toit, il est prévu une paroi support verticale (3) contre laquelle des bords relevés (5) des fonds emmanchables (3) viennent s'appuyer.

2. Piège à insectes selon la revendication 1, caractérisé en ce que l'arête supérieure du toit est munie d'un faîte (7) dans lequel la paroi support (3) est engagée.

FIG.1

FIG.3

FIG. 2